# EUROPÄISCHE PATENTSCHRIFT

(11) **EP 1 526 014 B1**
(45) Veröffentlichungstag und Bekanntmachung des Hinweises auf die Patenterteilung: **09.05.2007**
(21) Anmeldenummer: 04104507.1
(22) Anmeldetag: 17.09.2004
(51) Int. Cl.: B60G 17/015, B60G 11/27, F16F 9/05, G01B 17/00

(54) **Luftfeder mit Ultraschall-Messanordnung**
Air spring with ultrasound measuring arrangement
Ressort à air avec système de mesure par ultrasons

(30) Priorität: 24.10.2003 DE 10349797
(43) Veröffentlichungstag der Anmeldung: 27.04.2005
(73) Patentinhaber: ContiTech Luftfedersysteme GmbH, 30165 Hannover (DE)
(72) Erfinder: Reck, Siegfried, 31582, Nienburg (DE); Pehmöller, Thomas, 37620, Wegensen (DE)
(74) Vertreter: Finger, Karsten

(56) Entgegenhaltungen:
- EP-A- 0 844 116
- EP-A- 1 295 737
- DE-A- 3 423 602
- DE-C- 19 701 530

## Beschreibung

Eine gattungsgemäße Luftfeder mit den im Oberbegriff des Anspruchs 1 genannten Merkmalen weist eine Ultraschall-Messanordnung zur Bestimmung der Federhöhe nach der Impuls/Echo-Methode auf.

In der Patentschrift EP 844 116 B 1 ist eine Einrichtung zur Ultraschall-Abstandsmessung innerhalb der Luftfeder eines Kraftfahrzeugs beschrieben. Die Oberfläche des Reflektors, der auf der Symmetrieachse der Luftfeder angeordnet ist, ist konvex geformt und in Richtung auf den Ultraschall-Sender/Empfänger ausgerichtet. Über die Beschaffenheit des Reflektors und seiner Oberfläche wird weiter nichts ausgesagt.

Bei Luftfedern, die mit einem internen Anschlagpuffer ausgestattet sind, wird dieser als Reflektor für die Ultraschall-Abstandsmessung verwendet.
Ein Reflexionskörper mit dem Volumen eines Anschlagpuffers verringert das nutzbare Federvolumen und verändert dadurch die Kennlinie der Feder. Außerdem erhöht ein Reflexionskörper mit der Masse eines Anschlagpuffers das Gewicht der Luftfeder.

Häufig wird das Volumen des Abrollkolbens als Zusatzvolumen für die Feder genutzt. Befindet sich ein Anschlagpuffer in diesen Federn, so ist dieser mit relativ großen Durchlässen zu versehen, die das Balgvolumen mit dem Kolbenvolumen verbinden. Diese Luftdurchlässe stören die Oberfläche des Reflektors und beeinträchtigen die Ultraschall-Abstandsmessung.

Zahlreiche Luftfedertypen verfügen jedoch nicht über einen internen Anschlagpuffer. In diesen Fällen ist der Reflektor ein spezielles Bauteil.

### Aufgabe der Erfindung

Die Aufgabe der Erfindung besteht darin, den Reflektor einer gattungsgemäßen Luftfeder derartig weiterzubilden, dass ein freier Zugang zu einem Zusatzvolumen nicht behindert wird.

### Lösung und Vorteile

Der üblicherweise auf dem Kolben angebrachte Reflektor ist gemäß Anspruch 1 luftdurchlässig. Aus diesem Grunde wird ein Luftaustausch zwischen dem Balginnenraum und einem hinter dem Reflektor befindlichen Zusatzvolumen, z. B. dem Kolbenvolumen, praktisch nicht behindert.
Dieselbe vorteilhafte Wirkung wäre gegeben, wenn sich der Sender/Empfänger ortsfest am Abrollkolben und sich der Reflektor am Luftfederdeckel mit einem dahinter angeordneten Zusatzvolumen befände.

Ein flächiges Material mit Gitterstruktur ist nicht nur luftdurchlässig sondern auch leicht. Es nimmt praktisch kein Bauvolumen ein.
Das Gitter kann die Gestalt eines Drahtgitters oder eines Lochbleches aufweisen. Solange die Maschenweite bzw. der Lochabstand, d. h. die Gitterkonstante d - und damit auch der Lochdurchmesser - kleiner als eine halbe Wellenlänge λ/2 des Ultraschallsignals ist (d < λ/2), wirkt die Reflektoroberfläche für das Ultraschallsignal als stetige Oberfläche.

Aus dem flächigen Drahtgitter lassen sich für die jeweiligen Anwendung geeignete konvexe Reflexionsflächen herstellen, die sich durch geringes Gewicht und hohe Luftdurchlässigkeit auszeichnen. Außerdem können notwendige Öffnungen in Anschlagpuffern von Luftfedern schalltechnisch geschlossen werden ohne der Luftströmung zu hohen Widerstand zu bieten.
Durch eine konvexe Ausbildung der Reflektoroberfläche werden leichte Torkelbewegungen der Luftfeder ausgeglichen, so dass in jedem Fall ein praktisch vertikales Auftreffen des Ultraschallstrahls und damit weitgehend totale Reflexion gewährleistet ist.

### Zeichnungen

Ein Ausführungsbeispiel der Erfindung ist in den Zeichnungen dargestellt. Es zeigt:
Fig. 1 eine erfindungsgemäße Luftfeder mit Ultraschall-Messanordnung, im Längsschnitt;
Fig. 2 das eine Gitterstruktur aufweisende, flächige Material, in perspektivischer Ansicht;
Fig. 3 ein aus dem flächigen Material hergestellter Ultraschall-Reflektor, ebenfalls in perspektivischer Ansicht.

### Beschreibung

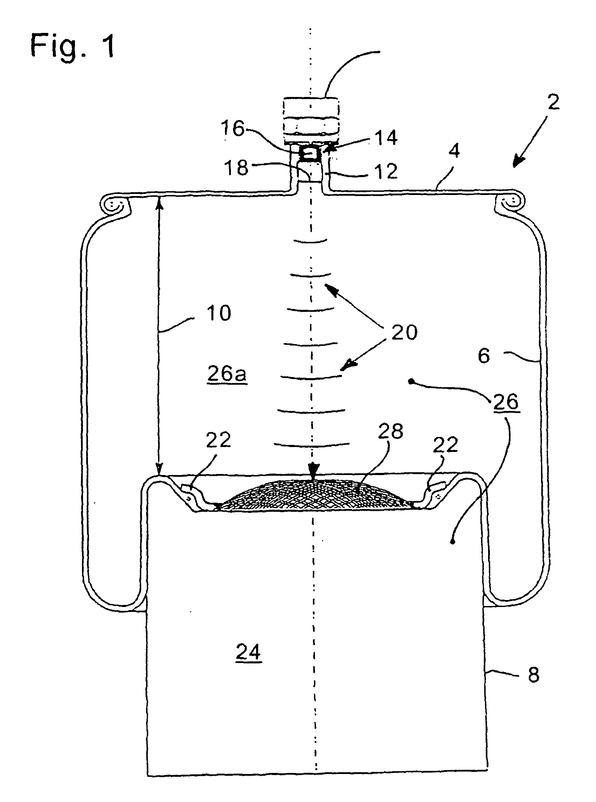

Eine Luftfeder 2 besteht üblicherweise im wesentlichen aus einer Abdeckplatte 4, einem Rollbalg 6 und einem Abrollkolben 8 (Fig. 1). Die Abdeckplatte 4 ist am Fahrzeuglängsträger chassisfest angebracht. Der Abrollkolben 8 ist radseitig befestigt. Beim Einfederungsvorgang rollt der Rollbalg 6 auf dem Abrollkolben 8 ab, wobei sich der (lichte) Abstand 10 zwischen Abdeckplatte 4 und Abrollkolben 8 entsprechend ändert. Zur Bestimmung der Fahrhöhe gilt es, diesen Abstand 10 (Federhöhe) zu messen.
Zu diesem Zweck befindet sich in der Abdeckplatte 4 ein Rohrstutzen 12 mit einer als Sender und Empfänger ausgebildeten Ultraschallkomponente 14.

Die Ultraschallkomponente 14 weist einen dämpfend gelagerten Ultraschallwandler 16 auf. Mit Hilfe eines Referenzreflektors 18 kann zwecks Druck- und/oder Temperaturkompensation ein Referenzwert gebildet werden.
Der Ultraschallwandler 16 ist so angeordnet, dass sein Hauptstrahl 20 in Richtung auf die Mitte des Abrollkolbens 8 gerichtet ist. Dafür ist der Rohrstutzen 12 so gestaltet, dass der in der Luftfeder 2 befindliche Freiraum durch ihn nicht eingeschränkt wird.

Zur Befestigung des Rollbalgs 6 weist der Abrollkolben 8 einen Spannteller 22 auf. Der Spannteller 22 besteht nicht - wie üblich - aus einer in sich geschlossenen Platte sondern ist ringförmig ausgebildet, so dass unter Hinzunahme des Abrollkolben-Innenraums 24 das wirksame Luftfeder-Volumen 26 entsprechend größer ist: wirksames Luftfedervolumen 26 = Abrollkolben-Innenraum 24 + variables Rollbalg-Volumen 26a.

Der ringförmige Spannteller 22 ist mit einem konvexgewölbten, luftdurchlässigen Gitter abgedeckt. Dieses Gitter dient als Reflektor 28 für das von dem Ultraschallwandler 16 abzustrahlende Ultraschallsignal 20.

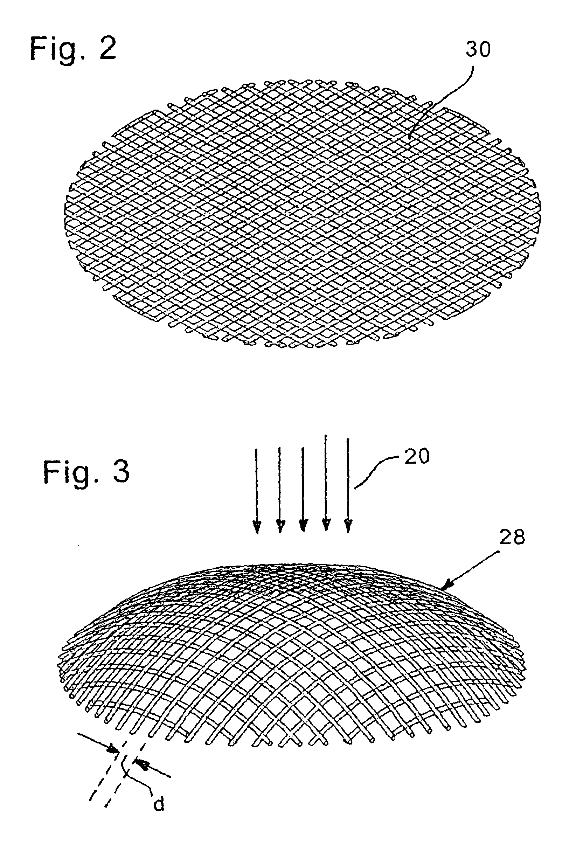

Der gitterförmige Reflektor 28, der im Detail in den Figuren 2 und 3 dargestellt ist, besteht aus einem flächigen Material mit Gitterstruktur 30. Damit der auftreffende Ultraschall 20 von diesem gitterförmigen oder gelochten Material 30 hinreichend reflektiert wird, ist die größte Abmessung der Maschen (Maschenweite bzw. Lochabstand d) kleiner als die halbe Wellenlänge λ/2 des Ultraschallsignals (d < λ/2).

Aus dem flächigen Ausgangsmaterial 30 (Fig. 2) lassen sich für die jeweilige Anwendung geeignete konvexe Reflexionsflächen 28 herstellen (Beispiel: Fig. 3).

### Bezugszeichenliste

- 2: Luftfeder
- 4: Abdeckplatte
- 6: Rollbalg
- 8: Abrollkolben
- 4,8: Endglieder
- 10: (lichter) Abstand zwischen Abdeckplatte (4) und Abrollkolben (8), Federhöhe
- 12: Rohrstutzen
- 14: Sender/Empfänger, Ultraschallkomponente
- 16: Ultraschallwandler
- 18: Referenzreflektor
- 20: Hauptstrahl, Ultraschallsignal, Ultraschall
- 22: Spannteller
- 24: Innenraum des Abrollkolbens (8), Zusatzvolumen
- 26: Luftfedervolumen, wirksames Volumen
- 26a: (variables) Rollbalgvolumen
- 28: Gitter, Reflektor, Reflexionsfläche
- d: Maschenweite bzw. Lochabstand
- 30: flächiges Material mit Gitterstruktur, Drahtgitter, Lochblech

## Patentansprüche

1. Luftfeder (2)
- mit zwei abstandsvariabel zueinander angeordneten Endgliedern (4, 8): einer Abdeckplatte (4) und einem Abrollkolben (8), der ein Volumen (24) aufweist, und
- mit einer im wesentlichen aus Sender/Empfänger (14) und einem Reflektor (28) bestehenden Ultraschall-Messanordnung zur berührungslosen Bestimmung der Federhöhe (10) nach der Impuls/Echo-Methode,
**dadurch gekennzeichnet,**
**dass** der Reflektor (28) die Abdeckung eines Zusatzvolumens bildet und luftdurchlässig ist..

2. Luftfeder nach Anspruch 1,
**dadurch gekennzeichnet,**
**dass** das Volumen (24) des Abrollkolbens (8) als Zusatzvolumen dient.

3. Luftfeder nach Anspruch 1 oder 2,
**dadurch gekennzeichnet,**
**dass** der Reflektor (28) aus einem flächigen Material (30) besteht, das eine Gitterstruktur aufweist.

4. Luftfeder nach Anspruch 3,
**dadurch gekennzeichnet,**
**dass** die Gitterstruktur von einem Drahtgitter oder einem Lochblech (30) gebildet wird.

5. Luftfeder nach Anspruche 4,
**dadurch gekennzeichnet,**
**dass** die größte Abmessung der Maschen (Maschenweite bzw. Lochabstand d) kleiner als die halbe Wellenlänge (λ/2) des Ultraschallsignals (20) ist (d < λ/2).

6. Luftfeder nach einem der Ansprüche 1 bis 5,
**dadurch gekennzeichnet,**
**dass** der Reflektor (28) konvex geformt ist und in Richtung auf den Ultraschall-Sender/Empfänger (14) ausgerichtet ist.

## Claims

1. Air spring (2)
- having two end elements (4, 8) which are arranged in such a way that the distance between them can be varied: a cover plate (4) and a rolling piston (8) which has a volume (24), and
- having an ultrasonic measuring arrangement which is essentially composed of a transceiver (14) and a reflector (28) and has the purpose of contactless determination of the height (10) of the spring according to the pulse/echo method,
**characterized in that** the reflector (28) forms the cover of an additional volume and is permeable to air.

2. Air spring according to Claim 1, **characterized in that** the volume (24) of the rolling piston (8) serves as an additional volume.

3. Air spring according to Claim 1 or 2, **characterized in that** the reflector (28) is composed of a planar material (30) which has a mesh structure.

4. Air spring according to Claim 3, **characterized in that** the mesh structure is formed from a wire mesh or a piece of perforated sheet metal (30).

5. Air spring according to Claim 4, **characterized in that** the largest dimension of the meshes (mesh width or space between holes d) is smaller than half the wavelength (λ/2) of the ultrasonic signal (20) - (d < λ/2).

6. Air spring according to one of Claims 1 to 5, **characterized in that** the reflector (28) is shaped convexly and is oriented in the direction of the ultrasonic transceiver (14).

## Revendications

1. Amortisseur pneumatique (2), qui présente :
- deux éléments d'extrémité (4, 8) disposés à distance variable l'un de l'autre, à savoir une plaque de recouvrement (4) et un piston de déroulement (8) qui présente un volume (24) et
- un système de mesure par ultrasons constitué essentiellement d'un émetteur/récepteur (14) et d'un réflecteur (28), pour déterminer sans contact la hauteur d'amortissement (10) par la méthode à impulsions et échos,
**caractérisé en ce que**
- le réflecteur (28) forme le recouvrement d'un volume supplémentaire et est imperméable à l'air.

2. Amortisseur pneumatique selon la revendication 1, **caractérisé en ce que** c'est le volume (24) du piston de déroulement (8) qui sert de volume supplémentaire.

3. Amortisseur pneumatique selon les revendications 1 ou 2, **caractérisé en ce que** le réflecteur (28) est constitué d'un matériau plat (30) qui présente une structure en grille.

4. Amortisseur pneumatique selon la revendication 3, **caractérisé en ce que** la structure en grille est formée par une grille de fils ou par une tôle perforée (30).

5. Amortisseur pneumatique selon la revendication 4, **caractérisé en ce que** la plus grande dimension des mailles (taille des mailles ou écart d entre les trous) est inférieure à la demi-longueur d'onde (λ/2) du signal d'ultrasons (20) (d < λ/2).

6. Amortisseur pneumatique selon l'une des revendications 1 à 5, **caractérisé en ce que** le réflecteur (28) a une forme convexe et est orienté en direction de l'émetteur/récepteur d'ultrasons (14).
